# EUROPÄISCHE PATENTSCHRIFT

(11) **EP 2 814 709 B1**
(45) Veröffentlichungstag und Bekanntmachung des Hinweises auf die Patenterteilung: **07.10.2020**
(21) Anmeldenummer: 12743892.7
(22) Anmeldetag: 01.08.2012
(51) Int. Cl.: B60W 20/10, B60W 10/06, B60W 10/08, B60W 50/06, B60L 15/20, F02D 31/00

(54) **REGELSYSTEM ZUR DREHZAHLREGELUNG EINES VERBRENNUNGSMOTORS UND EINES ELEKTROMOTORS**
CONTROL SYSTEM FOR CONTROLLING THE ROTATIONAL SPEED OF A COMBUSTION ENGINE AND AN ELECTRIC MOTOR
SYSTÈME DE RÉGULATION DE LA VITESSE DE ROTATION D'UN MOTEUR À COMBUSTION ET D'UN MOTEUR ÉLECTRIQUE

(30) Priorität: 15.02.2012 DE 102012003020
(43) Veröffentlichungstag der Anmeldung: 24.12.2014
(73) Patentinhaber: Audi AG, 85045 Ingolstadt (DE)
(72) Erfinder: BRUNNER, Harald, 85055 Ingolstadt (DE); GÖBEL, Andreas, 86666 Burgheim (DE); KIELSTEIN, Jens, 85098 Grossmehring (DE)
(74) Vertreter: Wohnert, Dietmar
(86) Internationale Anmeldenummer: PCT/EP2012/003269
(87) Internationale Veröffentlichungsnummer: WO 2013/120503

(56) Entgegenhaltungen:
- DE-A1-102010 030 382

## Beschreibung

Die Erfindung betrifft ein elektronisches Regelsystem zur Drehzahlregelung gemäß Oberbegriff des Patentanspruchs 1.

Die Regelung der Motordrehzahl erfolgt in Kraftfahrzeugen nach dem Stand der Technik unter Berücksichtigung der Drehzahldifferenz zwischen einer gewünschten Soll-Drehzahl und einer gemessenen Ist-Drehzahl. Die Drehzahlregelungsfunktion ist üblicherweise im Motorsteuergerät integriert, wobei zur Bestimmung der Regelparameter die Differenzdrehzahl und auch der Gradient der Ist-Drehzahl ausgewertet werden. Durch eine Gradientenbewertung kann auf eine abdriftende Ist-Drehzahl schneller reagiert werden als bei einer reinen Differenzdrehzahlauswertung, da die Regelung die Änderungsgeschwindigkeit des Ist-Drehzahlwertes berücksichtigen kann. Ein solches Regelsystem setzt aber voraus, dass die Soll-Drehzahl zumindest nahezu konstant bleibt und zumindest keine Drehzahlsprünge aufweist.

Bei Elektrofahrzeugen und bei Hybridfahrzeugen mit Verbrennungsmotor und Elektromotor als Antriebsmotoren ist die Soll-Drehzahl in vielen Fällen nicht mehr annähernd konstant, sondern kann diese je nach Betriebsart des Kraftfahrzeugs große Drehzahlsprünge aufweisen. Bei unterschiedlichen Betriebszuständen, wie hybridisch fahrend, hybridisch stehend, elektrisch fahrend, elektrisch stehend, zusätzliches Starten eines zweiten Antriebsmotors, ergeben sich jeweils andere und auch dynamische Soll-Drehzahlen, unter denen innerhalb kurzer Zeit gewechselt werden kann. Es kann sich auch eine Soll-Drehzahl von einer konstanten Ist-Drehzahl wegbewegen, was bei der reinen Betrachtung des Drehzahlgradienten der Ist-Drehzahl keine schnellere Reaktionsmöglichkeit gegenüber einer reinen Differenzdrehzahlauswertung ergibt. Bei solchen herkömmlichen Regelsystemen kann es auf Grund der Gradientenauswertung in speziellen Fällen sogar zu einer falschen Beeinflussung der Drehzahlregelung kommen.

Aus der DE 10 2006 005 468 A1 ist ein Verfahren zum Betreiben eines Parallel-Hybridantriebsstranges eines Kraftfahrzeuges bekannt, bei dem zur Getriebesteuerung eine Drehzahlüberwachung eines Verbrennungsmotors und eines Elektromotors durchgeführt wird. Dieses bekannte Verfahren betrifft jedoch nicht die Drehzahlregelung eines Antriebsmotors eines Kraftfahrzeugs unter Berücksichtigung von sich stark ändernden oder sich sprunghaft ändernden Soll-Drehzahlen.

Aus der DE 10 2010 030 382 A1 ist ein gattungsgemäßes Verfahren zum Betreiben eines Antriebsstranges bekannt.

Der Erfindung liegt die Aufgabe zugrunde, ein elektronisches Regelsystem zur Drehzahlregelung wenigstens eines Verbrennungsmotors und eines Elektromotors eines Hybridfahrzeugs anzugeben, welches auch bei sich ändernder Soll-Drehzahl eine schnelle und sichere Drehzahlregelung ermöglicht.

Die der Erfindung zugrunde liegende Aufgabe wird mit den Merkmalen des Patentanspruchs 1 gelöst.

Gemäß Patentanspruch 1 ist ein elektronisches Regelsystem vorgesehen, bei dem die Differenzdrehzahl zwischen einer vorgegebenen Soll-Drehzahl und einer Ist-Drehzahl und zusätzlich der Differenzdrehzahlgradient nach Betrag und Richtung zur Bestimmung der Regelparameter berücksichtigt werden. Die Differenzdrehzahl und der Differenzdrehzahlgradient können als Systemwerte bezeichnet werden, die das elektronische Regelsystem ständig zur Durchführung der Drehzahlregelung überwacht. Durch die Berücksichtigung des Differenzdrehzahlgradienten kann die Änderungsgeschwindigkeit der Differenzdrehzahl beispielsweise von einem Prozessor erkannt werden, der dann in Verbindung mit der zugehörigen Differenzdrehzahl das Regelmoment, welches auf die Drehzahlregelung wirkt, schnell und zielgerichtet einstellen kann.

Vom Regelsystem werden als weitere Systemwerte zur Bestimmung von Regelparametern die Änderungsgeschwindigkeit der Soll-Drehzahl und/oder Ist-Drehzahl berücksichtigt, wodurch unter zusätzlicher Berücksichtigung der Soll-Drehzahl und/oder der Ist-Drehzahl auch auf die relative Änderungsgeschwindigkeit dieser beiden Systemwerte geschlossen werden kann. Durch eine Berücksichtigung dieser zusätzlichen Systemwerte kann eine weitere Verfeinerung des Regelverhaltens erreicht werden.

Die Regelparameter für das Regelsystem sind zu den möglichen Systemwerten in einem Speicher abgelegt sind, so dass das Regelsystem direkt auf diese Werte zugreifen kann. Mittels den in einem Parameter-Kennfeldspeicher abgelegten Regelparametern kann eine hohe Regelgeschwindigkeit und eine einfache Anpassung an unterschiedliche Antriebssysteme realisiert werden.

Die im Parameter-Kennfeldspeicher abgespeicherten Regelparameter sind zu Systemwerten und Systemwertpaarungen oder auch zu Verknüpfungen mehrerer Systemwerte in entsprechenden Kennfeldern abgespeichert. Dabei kann es sich auch um mehrdimensionale Kennfelder handeln, so dass zu einer Vielzahl von Systemwerteverknüpfungen zugeordnete Regelparameter abgespeichert sein können.

Mit dem erfindungsgemäßen Regelsystem werden die Drehzahlen von zwei Antriebsmotoren bei einem Hybridfahrzeug gesteuert. Dabei kann für jede der einzeln oder auch gemeinsam zum Einsatz kommenden Antriebsmotoren abhängig von der Differenzdrehzahl und dem Differenzdrehzahlgradienten und ggf. von weiteren Systemwerten das erforderliche Regelmoment schnell und auf die richtige Weise beeinflusst werden. Durch die Betrachtung des Differenzdrehzahlgradienten kann in jedem Fall sofort festgestellt werden, ob sich die überwachten Drehzahlen aufeinander zu bewegen oder sich voneinander entfernen.

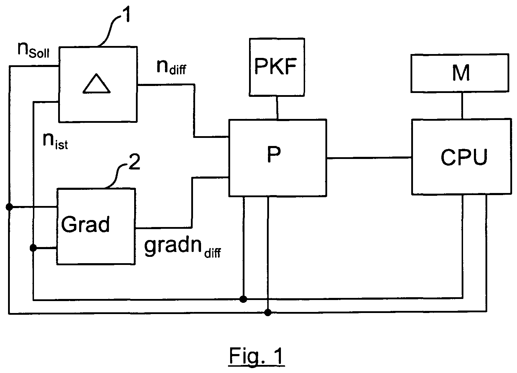

Nachfolgend ist anhand eines Ausführungsbeispiels, welches in der einzigen Figur 1 der Zeichnung dargestellt ist, die Erfindung näher erläutert.

Figur 1 zeigt ein Blockschaltbild eines erfindungsgemäßen elektronischen Regelsystems, welches ein Motorsteuergerät CPU beinhaltet, das einen Antriebsmotor M steuert. Das Motorsteuergerät CPU liefert die Ist-Drehzahl nᵢₛₜ und die Soll-Drehzahl nₛₒₗₗ des Antriebsmotors M an einen Subtrahierer 1 und eine Einrichtung 2, die aus der Differenz zwischen nₛₒₗₗ und nᵢₛₜ einen Differenzdrehzahlgradienten gradn_{diff} bildet und diesen an einen Prozessor P übermittelt. Der Subtrahierer 1 übermittelt an den Prozessor P die Differenzdrehzahl n_{diff}.

Die dem Prozessor P zugeführte Differenzdrehzahl n_{diff} und der zugeführte Differenzdrehzahlgradient gradn_{diff} können allgemein als Systemwerte bezeichnet werden, die der Prozessor P zur Bestimmung von Regelparametern heranzieht. Im dargestellten Ausführungsbeispiel ist der Prozessor P mit einem Parameter-Kennfeldspeicher PKF verbunden, in welchem zu sämtlichen möglichen Systemwertekombinationen zugehörige Regelparameter in Form eines oder mehrerer Kennfelder abgespeichert sind.

Dem Prozessor P werden im dargestellten Ausführungsbeispiel als weitere Systemwerte die Soll-Drehzahl nₛₒₗₗ und die Ist-Drehzahl nᵢₛₜ übermittelt, so dass auch eine Parameterzuordnung unter Berücksichtigung dieser zusätzlichen Systemwerte erfolgen kann. Grundsätzlich besteht dabei auch die Möglichkeit, weitere Systemwerte zur Bestimmung der Regelparameter zu berücksichtigen.

Die vom Prozessor P ermittelten Regelparameter werden an das Motorsteuergerät CPU übermittelt, so dass dieses die Steuerung der Drehzahl des Motors M mittels eines Steuerprogramms unter Berücksichtigung dieser Regelparameter durchführen kann.

Um eine Anpassung an unterschiedliche Motortypen und unterschiedliche Einsatzbereiche auf möglichst einfache Weise vornehmen zu können, werden systemspezifische Regelparameter in dem Parameterkennfeldspeicher PKF abgelegt. Eine Anpassung an unterschiedliche Motortypen oder Einsatzbereiche ist durch einen einfachen Austausch der Regelparameter im Parameter-Kennfeldspeicher möglich.

## Patentansprüche

1. Elektronisches Regelsystem zur Regelung der Drehzahl eines Verbrennungsmotors und eines Elektromotors, die als Antriebsmotoren (M) in einem Hybridfahrzeug angeordnet sind, wobei für jeden der beiden Antriebsmotoren (M) zugehörige motorspezifische Regelparameter verwendet werden, wobei die Differenzdrehzahl (n_{diff}) zwischen einer vorgegebenen Soll-Drehzahl (nₛₒₗₗ) und einer Ist-Drehzahl (nᵢₛₜ) jedes Antriebsmotors (M) als Systemwert zur Bestimmung von die Drehzahlregelung beeinflussenden motorspezifischen Regelparametern berücksichtigt werden, und wobei als zusätzlicher Systemwert der Differenzdrehzahlgradient (gradn_{diff}) nach Betrag und Richtung zur Bestimmung der motorspezifischen Regelparameter berücksichtigt wird, **dadurch gekennzeichnet, dass** zusätzlich zur Bestimmung der motorspezifischen Regelparameter als weitere Systemwerte die Änderungsgeschwindigkeit der Soll-Drehzahl (nₛₒₗₗ) und/oder der Ist-Drehzahl (nᵢₛₜ) berücksichtigt werden, und dass die Systemwerte einem Prozessor (P) übermittelt werden, der aus einem Parameter-Kennfeldspeicher (PKF), in dem zu sämtlichen möglichen Systemwertkombinationen zugeordnete motorspezifische Regelparameter abgelegt sind, zu Systemwertkombinationen die zugehörigen motorspezifischen Regelparameter ausliest und diese an ein Motorsteuergerät (CPU) der Antriebsmotoren (M) übermittelt.

## Claims

1. Electronic control system for controlling the speed of an internal combustion engine and an electric motor, which are arranged as drive motors (M) in a hybrid vehicle, wherein associated motor-specific control parameters are used for each of the two drive motors (M), wherein the differential speed (n_{diff}) between a predefined target speed (nₛₒₗₗ) and an actual speed (nᵢₛₜ) of each drive motor (M) are considered as system value for determining motor-specific control parameters that influence the speed control, and wherein as additional system value the differential speed gradient (gradn_{diff}) is considered in terms of magnitude and direction for determining the motor-specific control parameters, **characterised in that** in addition to determining the motor-specific control parameters as further system values the changing speed of the target speed (nₛₒₗₗ) and/or the actual speed (nᵢₛₜ) are taken into account, and **in that** the system values are transmitted to a processor (P), which from a parameter engine characteristic memory (PKF), in which motor-specific control parameters assigned to all possible system value combinations are stored, reads the associated motor-specific control parameters for system value combinations and transmits the latter to a motor control unit (CPU) of the drive motors (M).

## Revendications

1. Système de régulation électronique pour la régulation de la vitesse de rotation d'un moteur à combustion interne et d'un moteur électrique, qui sont agencés en tant que moteurs d'entrainement (M) dans un véhicule hybride, dans lequel, pour chacun des deux moteurs d'entrainement (M), des paramètres de régulation spécifiques aux moteurs connexes sont utilisés, dans lequel la vitesse de rotation différentielle (n_{diff}) entre une vitesse de rotation de consigne prédéterminée (nₛₒₗₗ) et une vitesse de rotation réelle (nᵢₛₜ) de chaque moteur d'entraînement (M) est prise en compte en tant que valeur de système pour déterminer les paramètres de régulation spécifiques aux moteurs influençant la régulation de la vitesse de rotation, et dans lequel le gradient de vitesse de rotation différentielle (gradn_{diff}) en termes d'amplitude et de direction est pris en compte en tant que valeur de système supplémentaire pour déterminer les paramètres de régulations spécifiques aux moteurs, **caractérisé en ce que**, en plus de la détermination des paramètres de régulation spécifiques aux moteurs, le taux de variation de la vitesse de rotation de consigne (nₛₒₗₗ) et/ou de la vitesse de rotation réelle (nᵢₛₜ) sont pris en compte en tant qu'autres valeurs de système, et **en ce que** les valeurs de système sont transmises à un processeur (P), qui lit les paramètres de régulation spécifiques au moteur associés aux combinaisons de valeurs de système dans une mémoire de carte de paramètres (PKF), dans laquelle sont enregistrés les paramètres de régulation spécifiques au moteur associées à toutes les combinaisons de valeurs de système possibles, et les transmet à un appareil de commande de moteur (CPU) des moteurs d'entraînement (M).
